**Europäisches Patentamt**

**European Patent Office**

**Office européen des brevets**

(11) Veröffentlichungsnummer : **0 332 220 B1**

(12) # EUROPÄISCHE PATENTSCHRIFT

(45) Veröffentlichungstag der Patentschrift :
03.06.92 Patentblatt 92/23

(51) Int. Cl.$^5$ : **B23K 9/20**

(21) Anmeldenummer : **89104362.2**

(22) Anmeldetag : **11.03.89**

---

(54) **Bolzenschweisspistole.**

---

(30) Priorität : **11.03.88 DE 3808201**

(43) Veröffentlichungstag der Anmeldung :
**13.09.89 Patentblatt 89/37**

(45) Bekanntmachung des Hinweises auf die
Patenterteilung :
**03.06.92 Patentblatt 92/23**

(84) Benannte Vertragsstaaten :
**AT BE CH DE FR GB IT LI NL**

(56) Entgegenhaltungen :
**DE-U- 8 010 343**
**US-A- 3 114 827**

(73) Patentinhaber : **Bolzenschweisstechnik Heinz Soyer GmbH**
**Inningerstrasse 14**
**W-8031 Wörthsee-Etterschlag (DE)**

(72) Erfinder : **Reiter, Johann**
**Oberfeld 1**
**W-8031 Hechendorf (DE)**

(74) Vertreter : **von Kirschbaum, Albrecht, Dipl.-Ing.**
**Hermann-Ehlers-Strasse 21a**
**W-8034 Germering (DE)**

## Beschreibung

Die Erfindung betrifft eine Bolzenschweißpistole zum Kontaktschweißen von Bolzen u.ä. nach dem Oberbegriff des Anspruchs 1 bzw. eine Bolzenschweißpistole zum Spaltschweißen nach dem Oberbegriff des Anspruchs 2 oder 3.

In US-A-3 114 827 ist eine Bolzenschweißpistole beschrieben, die ein abgestuftes, zylinderförmiges Gehäuse mit einem daran angeformten Griff aufweist. Am vorderen Ende des zylinderförmigen Gehäuses ist eine Frontplatte zur einstellbaren Halterung von drei vorstehenden Füßen angebracht. Im vorderen Teil des Gehäuses ist ein Bolzenhalter in Längsrichtung verschiebbar geführt, in welchen ein komplizierter und aufwendig ausgeführter Verbindungsmechanismus geschraubt ist, durch welche eine Verbindung zwischen dem Bolzenhalter und einem als Kolben wirkenden Hubteil geschaffen ist. Der Hubteil ist hier-bei in einer Buchse verschiebbar geführt, die an ihrem vorderen Ende in einen zylinderförmigen Käfig mit einem etwas größeren Durchmesser zur Aufnahme einer Anzahl Kugeln übergeht. An dem dem Bolzenhalter gegenüberliegenden Ende geht der Hubteil in einen ebenfalls zylindrischen Teil mit größerem Durchmesser über, welcher an seinem hinteren, dem Bolzenhalter abgewandten Ende über einen konisch zulaufenden Teil in einem wiederum zylinderförmigen Teil mit erheblich kleinerem Durchmesser endet. Auf den Teil mit dem erheblich kleineren Durchmesser wirkt eine entsprechend dimensionierte Druckfeder, die sich an einer Kappe an der Pistolengehäuse-Rückseite stützt. Um eine Hubkraft auf den Hubteil auszuüben, ist in dessen Bereich mit dem größeren Durchmesser ein drehsicher gehaltertes Solenoid angeordnet.

Die vorstehend beschriebene Bolzenschweißpistole sowie alle bisher im Einsatz befindlichen Bolzenschweißpistolen zum Kontaktschweißen bzw. Spaltschweißen von Bolzen und ähnlichen Teilen weisen im allgemeinen verhältnismäßig große Abmessungen auf, welche in Richtung der Längs-Mittenachse einer solchen Pistole in der Größenordnung von 20cm und mehr liegen.

Ganz davon abgesehen, daß derart große Bolzenschweißpistolen allein schon aufgrund ihrer Größe und des dadurch bedingten Gewichts verhältnismäßig schwer sind, sind sie aus naheliegenden Gründen dann nicht verwendbar und einsetzbar, wenn der zur Verfügung stahende Raum sehr beschränkt ist, wie es beispielsweise im Motorbereich von Kraftfahrzeugen, in Schaltschränken u.ä. der Fall ist.

Aufgabe der Erfindung ist es daher, eine Bolzenschweißpistole zum Kontaktschweißen bzw. Spaltschweißen von Bolzen u.ä. zu schaffen, welche auch in engen, begrenzten Räumen, wie beispielsweise im Motorraumbereich von Kraftfahrzeugen, im Schaltschrankbau u.ä. mit Erfolg eingesetzt und verwendet werden kann.

Gemäß der Erfindung ist dies bei Bolzenschweißpistolen zum Kontaktschweißen oder Spaltschweißen von Bolzen u.ä. nach dem Oberbegriff des Anspurchs 1 bzw. nach dem Oberbegriff des Anspruchs 2 oder 3 durch die Merkmale im kennzeichnenden Teil des Anspruchs 1 bzw. des Anspruchs 2 oder 3 erreicht. Vorteilhafte Weiterbildungen der erfindungsgemäßen Bolzenschweißpistolen sind Gegenstand der Unteransprüche.

Gemäß der Erfindung sind beim Bolzenschweißen zum Kontakt-bzw. Spaltschweißen eine Bolzenhalteraufnahme, ein Kolben sowie ein Aufnahme- und Führungsteil als eine Einheit ausgebildet, und zwar in Form eines kurzen bis sehr kurzen, im wesentlichen symmetrischen Teils, das in seinem mittleren, den Kolben darstellenden Bereich vorzugsweise den größten Durchmesser aufweist. In diesem mittleren Bereich des im wesentlichen symmetrischen Teils ist vorzugsweise ein Schlitz ausgebildet, in welchen als Drehsicherung ein Ansatz eingreift, welcher ins Innere eines bei der erfindungsgemäßen Bolzenschweißpistole einteilig ausgeführten Kunststoffgehäuses vorsteht.

Dieses einteilige Kunststoffgehäuse ist jeweils an seinem vorderen, den Bolzenhalter-Aufnahmeteil umgebenden Ende durch einen im Gehäuse selbst gesicherten Metallring abgeschlossen, welcher zur genauen und zentrischen Führung des wesentlichen symmetrischen Teils bzw. dessen in dieser Richtung vorstehenden Bolzenhalter-Aufnahmeteils dient.

Darüber hinaus ist das andere, dem Führungs- und Aufnahmeteil gegenüberliegende, hintere Ende des einteiligen Kunststoffgehäuses durch eine Kappe abgeschlossen, welche in diesem hinteren Teil des Gehäuses drehbar gehaltert ist, so daß durch ein Verdrehen dieser Kappe der Federdruck der jeweiligen Druckfeder bzw. zusätzlich bei einer Bolzenschweißpistole zum Spaltschweißen auch noch der Abhub entsprechend eingestellt werden können.

Ferner ist am vorderen Gehäuseteil über eine mit einem Masseanschluß versehene Abdeckplatte aus Metall noch ein Stützrohr befestigt, vorzugsweise aufgeschraubt, das in seiner Länge so bemessen ist, daß sein freies, der Bolzenschweißpistole abgewandtes Ende genau mit dem vorderen Ende eines in den Aufnahmeteil des im wesentlichen achssymmetrischen Drehteils eingesetzten Bolzenhalters fluchtet.

Aufgrund dieser Ausbildung und Bemessung insbesondere des im wesentlichen symmetrischen Teils und des dieses Teil aufnehmenden Gehäuses der Bolzenschweißpistole liegt deren Gesamtabmessung in axialer Längsrichtung der Pistole etwa in der Größenordnung des Stützrohrs. Das bedeutet, die Länge des Stützrohrs einschließlich der Dicke der ihm zugeordneten Abdeckplatte und die Abmessung des das im wesentlichen symmetrische Teil und die Druckfeder umgebenden Gehäuses liegen ziemlich genau in der Größerordnung von 1 : 1 bzw. von in etwa 1 : 1,5.

Oder anders ausgedrückt, die erfindungsgemäße Bolzenschweißpistole hat in axialer Richtung eine Länge in der Größenordnung von etwa 80mm bzw. 100 bis 110mm. Dies wiederum bedeutet, daß die Abmessungen der erfindungsgemäßen Bolzenschweißpistole etwa auf ein Drittel bzw. die Hälfte der Abmessungen der bisher zur Verfügung stehenden Bolzenschweißpistolen verkleinert worden ist.

Wie umfangreiche Versuche der Anmelderin gezeigt haben, sind die mit den erfindungsgemäßen Bolzenschweißpistolen beim Kontaktschweißen bzw. Spaltschweißen erzielten Ergebnisse für Bolzen bis zu einem Durchmesser von 6mm in der Schweißqualität nicht nur mit den mit den üblichen, großen und verhältnismäßig schweren Bolzenschweißpistolen erzielten Ergebnissen vergleichbar, sondern von diesen überhaupt nich unterscheidbar.

Das bedeutet, die bei den erfindungsgemäßen Bolzenschweißpistolen erzielte Verkleinerung auf beinahe ein Drittel bzw. die Hälfte der bisher beim Kontaktschweißen bzw. Spaltschweißen verwendeten Bolzenschweißpistolen ist erreicht worden, ohne daß sich diese Verkleinerung in irgendeiner Weise nachteilig auf das Schweißergebnis auswirkt.

Nachfolgend wird die Erfindung anhand von bevorzugten Ausführungsformen unter Bezugnahme auf die anliegenden Zeichnungen im einzelnen erläutert. Es zeigen:

Fig.1 eine Schnittansicht einer Ausführungsform einer Bolzenschweißpistole zum Kontaktschweißen;

Fig.2 ebenfalls eine Schnittansicht einer Ausführungsform einer Bolzenschweißpistole zum Spaltschweißen und

Fig.3 wieder als Schnittansicht eine weitere Ausführungsform einer Bolzenschweißpistole zum Spaltschweißen.

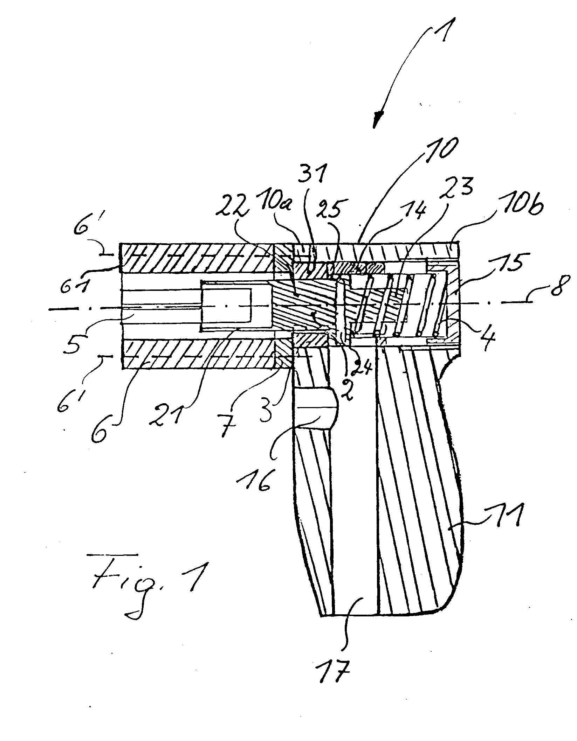

In den schematisch in Fig.1 bis 3 wiedergegebenen Bolzenschweißpistolen sind nur die im Hinblick auf die Erfindung wesentlichen Teile schematisiert dargestellt. So sind beispielsweise in in ihrer Gesamtheit mit 1Ø, 1Ø′ bzw. 1Ø″ bezeichneten, einteiligen Gehäusen in deren Griffteil 11 eine Bohrung 16 für einen nicht näher dargestellten Auslöser und eine dazu senkrechte Bohrung 17 zur Unterbringung und Halterung eines ebenfalls nicht näher dargestellten Speise- und Versorgungskabels angedeutet.

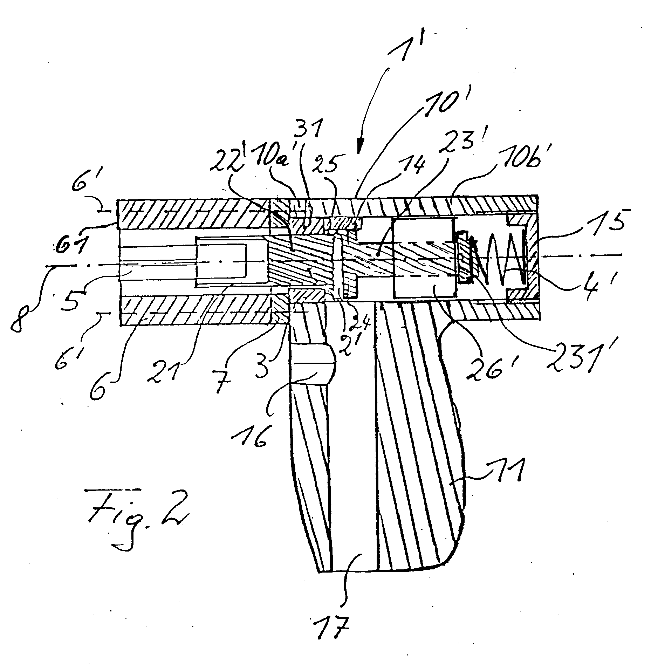

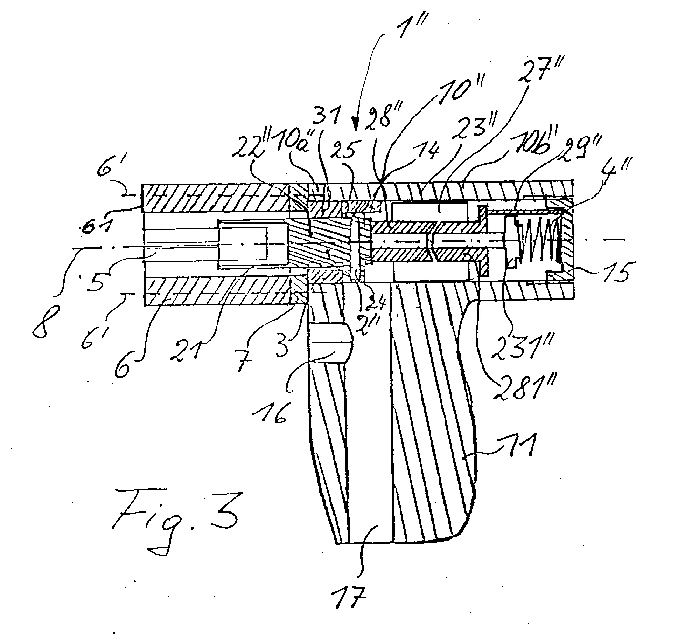

Durch die mit einem oder zwei Apostrophen versehenen Bezugszeichen ist angezeigt, daß dieser Teil der Bolzenschweißpistolen bei den beschriebenen drei Ausführungsformen unterschiedlich ist; hierbei betreffen die nicht mit Apostrophen versehenen Bezugszeichen das in Fig.1 dargestellte Ausführungsbeispiel bzw. die bei den Ausführungsbeispielen in Fig.2 und 3 unverändert übernommenen Teile, während die mit einem oder zwei Apostrophen versehenen Bezugszeichen sich auf die entsprechenden, modifizierten Teile der in Fig.2 bzw. 3 wiedergegebenen Ausführungsbeispiele beziehen.

Die einteiligen Gehäuse 1Ø, 1Ø′ und 1Ø″ sind aus einem hitzebeständigen Kunststoffmaterial hergestellt, wobei statt des sonst üblicherweise verwendeten Kunststoffmaterials PVC vorzugsweise hitzebeständigere Kunststoffmaterialien, wie Delrin (eingetragenes Warenzeichen) u.ä. verwendet sind.

Wie aud sen Figuren zu erzehen ist, ist im oberen Teil der Gehäuse 1Ø, 1Ø, und 1Ø, dh. dem jeweiligen Gehäuse-Mittenteil 10,10′bzw10″ am Ende der in den Figuren senkrecht verlaufenden Bohrung 17 zur Aufnahme des Speise- und Versorgungskabels jeweils ein im wesentlichen symmetrisches Teil 2Ø, 2Ø′ bzw. 2Ø″ untergebracht, dessen Achse 8 genau senkrecht zu der nicht näher angegebenen Achse der Bohrung 17 verläuft.

Die im wesentlichen symmetrischen Teile 2Ø, 2Ø′ bzw. 2Ø″ sind vorzugsweise als aus Messing hergestellte Drehteile ausgeführt, die an ihrem in den Figuren linken Ende jeweils einen Bolzenhalter-Aufnahmeteil 21, in dem anschließenden Bereich einen Kolbenteil 22, 22′ bzw. 22″ und an dem in der Figuren rechten Ende einen Aufnahme- und Führungsteil 23, 23′ bzw. 23″ zur Aufnahme und Führung jeweils mindestens einer schraubenförmigen Druckfeder 4, 4′bzw. 4″ umfassen; hierbei sind die erwähnten Teile 21, 22, 23; 21, 22′, 23′ bzw. 21, 22″, 23″ in dem im wesentlichen symmetrischen Teil 2Ø, 2Ø′ bzw. 2Ø″ zu einer Einheit zusammengefaßt.

Im oberen Teil der Gehäuse 1Ø, 1Ø′ bzw. 1Ø″ steht in deren Inneres ein schematisch angedeuteter, im Querschnitt etwa quadratischer Ansatz 14 vor, welcher in einen in den Figuren nur schematisch angedeuteten Schlitz 25 in diesem Bereich des im wesentlichen symmetrischen Teils 2Ø, 2Ø′ bzw. 2Ø″ eingreift, so daß dann dadurch das jeweilige, ins Gehäuse eingeführte, im wesentlichen symmetrische Teil 2Ø, 2Ø′ bzw. 2Ø″ verdreh-sicher in dem jeweiligen Gehäuse 1Ø, 1Ø′ bzw. 1Ø″ gehalten ist.

Die jeweiligen achssymmetrischen Teile 2Ø, 2Ø′ bzw. 2Ø″ sind am vorderen Ende 10a, 10a′,10a″ der Gehäuse 1,1′bzw 1″ in diesen durch einen Ring 3 gehaltert, welcher seinerseits durch eine Sicherung 31 in dem jeweiligen Gehäuse befestigt ist. Der Ring 3 dient hierbei der achssymmtrischen Führung des jeweiligen, im wesentlichen symmetrischen Teils 2Ø, 2Ø′ bzw. 2Ø″.

In den jeweiligen, im wesentlichen symmetrischen Teilen 2Ø, 2Ø′ bzw. 2Ø″ ist in den Fig.1 bis 3 noch eine Bohrung 24 angedeutet, in welcher ein nicht näher dargestelltes Stromzuführungskabel anbringbar ist. Ferner ist am vorderen Ende 10a,10a',10a" der Gehäuse 1Ø, 1Ø' bzw. 1Ø" der einzelnen Bolzenschweißpistolen noch eine Abdeckplatte 7 vorgesehen, welche mit einem nicht näher dargestellten Masseanschluß versehen ist. Die Abdeckplatte besteht aus Metall. Vor der Abdeckplatte 7 ist noch ein Stützrohr 6 dargestellt, das zusammen mit der Abdeckplatte 7 beispielsweise mittels Schrauben am Gehäusekörper befestigt ist, was durch zwei gestrichelte Linien 6' angedeutet ist.

Bei der in Fig.1 wiedergegebenen Ausführungsform einer Bolzenschweißpistole zum Kontaktschweißen nimmt der Aufnahme- und Führungsteil 23 des im wesentlichen symmetrischen Teils 20 eine schraubenförmige Druckfeder 4 auf, deren Druckkraft durch Verdrehen einer im Querschnitt u-förmigen Kappe 15 einstellbar ist. Die Kappe 15 weist an der Außenseite der parallel zur Achse 8 verlaufenden Seitenteile ein Außengewinde auf, welches in ein entsprechendes, im hinteren Gehäuse ende 10b vorgesehenes Innengewinde eingreift. Durch Verdrehen der Kappe 15 in Richtung der Mittenachse 8 kann somit durch ein Verdrehen nach links, d.h. in das Gehäuse 1Ø hinein bzw. durch ein Verdrehen nach rechts, d.h. aus dem Gehäuse heraus jeweils die gewünschte bzw. erforderliche Druckkraft der Feder eingestellt werden.

Bei der in Fig.2 wiedergegebenen Ausführungsform einer Bolzenschweißpistole zum Spaltschweißen ist, wie ein Vergleich mit Fig.1 zeigt, das Gehäuse 1Ø' nach rechts über den Griffteil 11 hinaus etwas verlängert. In etwa demselben Maße ist auch das Teil 2Ø' durch den Aufnahme- und Führungsteil 23' verlängert. Bei der Bolzenschweißpistole zum Spaltschweißen nach Fig.2 ist auf dem gegenüber Fig.1 verlängerten Führungsteil 23' ein Haftmagnet 26' angeordnet. Ferner ist am in Fig.2 rechten Ende des Führungs- und Aufnahmeteils 23' ein der Druckfeder-Zentrierung dienendes Teil 231' vorgesehen. Das Druckfeder-Zentrierteil 231' wird aus fertigungs- und montagetechnischen Gründen nach dem Aufschieben des Haftmagneten 26' am freien Ende des Aufnahme- und Führungsteils 23' angebracht, vorzugsweise mit diesem Ende verschraubt, so daß nach der Montage das aus der Bolzenhalteraufnahme 21, dem Kolben 22' und dem Aufnahme- und Führungsteil 23' bestehende Teil 2Ø' und das vorzugsweise aufgeschraubte Druckfeder-Zentrierteil 231' ebenfalls wieder als einheitliches Teil anzusehen sind.

Zwischen dem Druckfeder-Zentrierteil 231' und der Einstellkappe 15 ist eine Druckfeder 4' angeordnet. Die zur Einstellung des Federdrucks vorgesehene Kappe 15 entspricht in Aus-Tührung und Wirkungsweise der in der Ausführungsform nach Fig.1 vorgesehenen Kappe 15.

Bei der in Fig.3 dargestellten Ausführungsform einer Bolzenschweißpistole für Spaltschweißen ist das Gehäuse 1Ø" ebenfalls wieder über den Griffteil 11 hinaus nach rechts etwas verlängert. Dementsprechend ist auch das Teil 2Ø" durch den Aufnahme- und Führungsteil 23" verlängert. Hierbei ist auf dem im Vergleich zu Fig.1 etwas länger ausgeführten Aufnahme- und Führungsteil 23" neben einem Anker 28" auch noch ein Teil 281" zum Einstellen des Abhubs vorgesehen. Der Anker 28" und der in Fig.3 linke Teil des Abhub-Einstellteils 281" sind von einer schematisch angedeuteten Magnetspule 27" umgeben. An dem in Fig.3 rechten Ende des Aufnahme- und Führungsteils 23" ist ähnlich wie bei der Ausführungsform nach Fig.2 auch wieder ein Druckfeder-Zentrierteil 231" vorgesehen, das auch in diesem Fall aus herstellungs- und montagetechnischen Gründen nach dem Aufbringen von Anker 28", Abhub-Einstellteil 281" und Magnetspule 27" mit dem Führungsteil 23" verbunden, vorzugsweise so verschraubt wird, daß das aus dem Bolzenhalteraufnahmeteil 21, dem Kolben 22" und dem Aufnahme- und Führungsteil 23" bestehende, im wesentlichen symmetrische Teil 2Ø" und der Druckfeder-Zentrierteil 231" zusammen eine Einheit sind.

Zwischen dem in Fig.3 rechten Ende des im wesentlichen symmetrischen Teils 2Ø", nämlich dessen Zentrierteil 231" und der im Querschnitt wieder u-förmigen Kappe 15 ist eine Druckfeder 4" angeordnet. Bei der Ausführungsform nach Fig.3 ist zwischen der Kappe 15 und dem Abhub-Einstellteil 281" ein Verbindungsteil 29" vorgesehen, das an den beiden Enden mit dem Abhub-Einstellteil 281" bzw. der Kappe 15 fest verbunden ist. Dies hat den Vorteil, daß durch Verdrehen der Einstellkappe gleichzeitig die Größe des Abhubs und der entsprechende Druck der Feder 4" eingestellt werden können.

Durch die Erfindung sind somit ausgesprochen handliche Bolzenschweißpistolen zum Kontakt- bzw. Spaltschweißen geschaffen, welche aufgrund ihrer kurzen Abmessungen in vorteilhafter Weise gerade in engen, begrenzten Räumen, so beispielsweise, wie bereits mehrfach erwähnt, im Motorbereich von Kraftfahrzeugen, beim Schaltschrankbau u.ä. einsetzbar sind.

**Patentansprüche**

1. Bolzenschweißpistole zum Kontaktschweißen von Bolzen u.ä., mit einer Bolzenhalteraufnahme (21), einem Kolben (22), einem Führungs- und Arfnahmeteil (23) für eine Druckfeder (4) sowie einem Teil (15) zum Einstellen des Federdrucks der Druckfeder, welche Teile in einem Gehäuse (1) aus Kunststoff untergebracht sind, an dessen vorderen Ende ein Stützrohr (6) angebracht ist, dadurch **gekennzeichnet,** daß die Bolzenhalteraufnahme (21), der Kolben (22) sowie der Führungs- und Aufnahmeteil (23) als eine Einheit in Form eines sehr kurzen, mit Abstufungen versehenen, zur Längsachse (8) der Bolzenschweißpistole im wesentlichen symmetrischen Teils (2) ausgebildet sind, welches Teil (2) verdrehsicher in einem parallel zu der Längsachse (8) ausgerichteten Mittenteil (10) des einteiligen Gehäuses (1) aus Kunststoff gehaltert ist, wobei der Gehäuse-Mittenteil (10) an seinem vorderen Ende (10a) durch einen in diesem (10) gesicherten Metallring (3) zur genauen Führung des zur Längsachse (8) im wesentlichen symmetrischen Teils (2) und an seinem den Federaufnahmeteil (23) umgebenden, hinteren Ende (10b) durch eine dort (10b) drehbar gehalterte Kappe (15) zum Einstellen des Federdrucks der Druckfeder (4) abgeschlossen ist, und
daß das Stützrohr (6), das über eine mit Masseanschluß versehene Abdeckplatte (7) aus Metall am vorderen Ende (10a) des Gehäuse-Mittenteils (10) befestigt ist, und der Gehäuse-Mittenteil (10), in welchem alle funktionswichtigen Teile (21,22, 23) der Bolzenschweißpistole untergebracht sind, in Richtung der gemeinsamen Längsachse (8) ein Größenverhältnis von etwa 1: 1 aufweisen.

2. Bolzenschweißpistole zum Spaltschweißen von Bolzen u.ä., mit einer Bolzenhalteraufnahme (21), einem Kolben (22′), einem Führungs- und Aufnahmeteil (23′) für einen Haftmagneten (26′) und für eine Druckfeder (4 ′) sowie einem Teil (15) zum Einstellen des Federdrucks der Druckfeder (4′) , welche Teile in einem Gehäuse (1′) aus Kunststoff untergebracht sind, an dessen vorderen Ende ein Stützrohr (6) angebracht ist, dadurch **gekennzeichnet**, daß die Bolzenhalteraufnahme (21), der Kolben (22′) sowie der Führungs- und Aufnahmeteil (23′) als eine Einheit in Form eines kurzen, mit Abstufungen versehen, zur Längsachse (8) der Bolzenschweißpistole im wesentlichen symmetrischen Teils (2′) ausgebildet sind, welches Teil (2′) verdrehsicher in einem parallel zu der Längsachse (8) ausgerichteten Mittenteil (10′) des einteiligen Gehäuses (1′) aus Kunststoff gehaltert ist, wobei der Gehäuse-Mittenteil (10′) an seinem vorderen Ende (10a′) durch einen in diesem (10′) gesicherten Metallring (3) zur genauen Führung des zur Längsachse (8) im wesentlichen symmetrischen Teils (2′) und an seinem den Aufnahmeteil (23′) umgebenden, hinteren Ende (10b′) durch eine dort (10b′) drehbar gehalterte Kappe (15) zum Einstellen des Federdrucks der Druckfeder (4′) abgeschlossen ist, daß das Stützrohr (6), das über eine mit Massenanschluß versehene Abdeckplatte (7) aus Metall am vorderen Ende (10a′) des Gehäuse-Mittenteils (10′) befestigt ist, und der Gehäuse-Mittenteil (10′), in welchem alle funktionswichtigen Teile (21, 22′,23′,26′) der Bolzenschweißpistole untergebracht sind, in Richtung der gemeinsamen Längsachse (8) ein Größenverhältnis in etwa von 1 : 1,5 aufweisen.

3. Bolzenschweißpistole zum Spaltschweißen von Bolzen u.ä., mit einer- Bolzenhalteraufnahme (21), einem Kolben (22″), einem Führungs- und Aufnahmeteil (23″) für einen Anker (28″) und einen verstellbaren Abhub-Einstellteil (281″) sowie für eine Druckfeder (4″), welche Teile in einem Gehäuse (1″) aus Kunststoff untergebracht sind, an dessen vorderen Ende ein Stützrohr (6) angebracht ist, dadurch **gekennzeichnet**, daß die Bolzenhalteraufnahme (21), der Kolben (22″) sowie der Führungs- und Aufnahmeteil (23″) als eine Einheit in Form eines kurzen, mit Abstufungen versehen, zur Längsachse (8) der Bolzenschweißpistole im wesentlichen symmetrischen Teils (2″) ausgebildet sind, welches Teil (2″) verdrehsicher in einem parallel zu der Längsachse (8) ausgerichteten Mittenteil (10″) des einteiligen Gehäuses (1″) aus Kunststoff gehaltert ist, wobei der Gehäuse-Mittelteil (10″) an seinem vorderen Ende (10a″) durch einen an diesem (10a″) gesicherten Metallring (3) zur genauen Führung des zur Längsachse (8) im wesentlichen symmetrischen Teils (2″) und an dem den Aufnahmeteil (23″) umgebenden, hinteren Ende (10b″) durch eine dort (10b″) drehbar gehalterte Kappe (15) zum Einstellen des Federdrucks der Druckfeder (4″) abgeschlossen ist, und
daß das Stützrohr (6), das über eine mit Masseanschluß versehene Abdeckplatte (7) aus Metall am vorderen Ende (10a″) des Gehäuse-Mittenteils (10″) angebracht ist, und der Gehäuse-Mittenteil (10″), in welchem alle funktionswichtigen Teile (21, 22″, 23″,28″) der Bolzenschweißpistole (1″) untergebracht sind, in Richtung deren gemeinsamer Längsachse (8) ein Größenverhältnis von etwa 1 : 1,5 aufweisen.

4. Bolzenschweißpistole nach einem der Ansprüche 1 bis 3, dadurch **gekennzeichnet**, daß der mittlere, den Kolben (22; 22′; 22″) darstellende Bereich des im zur Längsachse (8) im wesentlichen symmetrischen Teils (2; 2′; 2″) den größten Durchmesser aufweist und in seinem oberen Teil, welcher einer Bohrung zur Befestigung eines Stromzuführkabels gegenüberliegt, einen Schlitz (25) aufweist, in welchen ein ins Innere des Gehäuses (1; 1′; 1″) vorstehender Ansatz (14) als Drehsicherung eingreift.

5. Bolzenschweißpistole nach einem der Ansprüche 1 bis 3 oder 4, dadurch **gekennzeichnet**, daß das zur Längsachse (8) im wesentlichen symmetrische Teil (2; 2′;2″) vorzugsweise ein Messingdrehteil ist.

6. Bolzenschweißpistole nach einem der Ansprüche 1 bis 3 oder 4, dadurch **gekennzeichnet**, daß das einteilige Gehäuse (1; 1′; 1″) und die Kappe (15) aus einem hitzebeständigen Kunststoff, vorzugsweise aus Delrin (eingetragenes Warenzeichen) hergestellt sind.

**Revendications**

1. Pistolet à souder les goujons, pour le soudage par contact de goujons et organes similaires,comprenant un logement (21) du porte-goujons, un piston (22), une pièce (23) de guidage et de réception d'un ressort de pression (4), ainsi qu'une pièce (15) de réglage de la pression dudit ressort, ces pièces étant logées dans un boîtier (1) en matière plastique à l'extrémité antérieure duquel un tube d'appui (6) est installé, caractérisé par le fait

que le logement (21) du porte-goujons, le piston (22), ainsi que la pièce (23) de guidage et de réception sont réalisés en tant qu'ensemble unitaire revêtant la forme d'une partie (2) très courte, munie de gradins et pour l'essentiel symétrique par rapport à l'axe longitudinal (8) du pistolet à souder les goujons, ladite partie (2) étant retenue avec verrouillage anti-rotation dans une partie centrale (10), orientée parallèlement à l'axe longitudinal (8), du boîtier monobloc (1) en matière plastique, la partie centrale (10) du boîtier s'achevant, à son extrémité antérieure (10a), par une bague métallique (3) qui est arrêtée sur cette partie (10), en vue du guidage précis de la partie (2) pour l'essentiel symétrique par rapport à l'axe longitudinal (8) et, à son extrémité postérieure (10b) entourant la pièce (23) de réception du ressort, par un capuchon (15) qui est retenu avec faculté de rotation, sur ladite extrémité (10b), en vue du réglage de la pression élastique du ressort de pression (4) ; et par le fait

que le tube d'appui (6), fixé à l'extrémité antérieure (10a) de la partie centrale (10) du boîtier par l'intermédiaire d'une plaque métallique de recouvrement (7) dotée d'un raccordement à la masse, ainsi que la partie centrale (10) du boîtier, dans laquelle toutes les parties fonctionnellement importantes (21, 22, 23) du pistolet à souder les goujons sont intégrées, présentent un rapport dimensionnel d'environ 1 : 1 en direction de l'axe longitudinal commun (8).

2. Pistolet à souder les goujons, pour le soudage par capillarité de goujons et organes similaires, comprenant un logement (21) du porte-goujons, un piston (22'), une pièce (23') de guidage et de réception d'un aimant adhérent (26') et d'un ressort de pression (4'), ainsi qu'une pièce (15) de réglage de la pression dudit ressort (4'), ces pièces étant logées dans un boîtier (1') en matière plastique à l'extrémité antérieure duquel un tube d'appui (6) est installé, caractérisé par le fait que le logement (21) du porte-goujons, le piston (22'), ainsi que la pièce (23') de guidage et de réception sont réalisés en tant qu'ensemble unitaire revêtant la forme d'une courte partie (2') munie de gradins, et pour l'essentiel symétrique par rapport à l'axe longitudinal (8) du pistolet à souder les goujons, ladite partie (2') étant retenue avec verrouillage anti-rotation dans une partie centrale (10'), orientée parallèlement à l'axe longitudinal (8), du boîtier monobloc (1') en matière plastique, la partie centrale (10') du boîtier s'achevant, à son extrémité antérieure (10a'), par une bague métallique (3) qui est arrêtée sur cette partie (10'), en vue du guidage précis de la partie (2') pour l'essentiel symétrique par rapport à l'axe longitudinal (8) et, à son extrémité postérieure (10b') entourant la pièce réceptrice (23'), par un capuchon (15) qui est retenu avec faculté de rotation, sur ladite extrémité (10b'), en vue du réglage de la pression élastique du ressort de pression (4') ; et par le fait que le tube d'appui (6), relié à l'extrémité antérieure (10a') de la partie centrale (10') du boîtier par l'intermédiaire d'une plaque métallique de recouvrement (7) dotée d'un raccordement à la masse, ainsi que la partie centrale (10') du boîtier, dans laquelle toutes les parties fonctionnellement importantes (21, 22', 23', 26') du pistolet à souder les goujons sont intégrées, présentent un rapport dimensionnel d'environ 1 : 1,5 en direction de l'axe longitudinal commun (8).

3. Pistolet à souder les goujons, pour le soudage par capillarité de goujons et organes similaires, comprenant un logement (21) du porte-goujons, un piston (22''), une pièce (23'') de guidage et de réception d'un induit (28'') et d'une pièce mobile (281'') de réglage de la course, ainsi que d'un ressort de pression (4''), ces pièces étant logées dans un boîtier (1'') en matière plastique à l'extrémité antérieure duquel un tube d'appui (6) est installé, caractérisé par le fait que le logement (21) du porte-goujons, le piston (22''), ainsi que la pièce (23'') de guidage et de réception sont réalisés en tant qu'ensemble unitaire revêtant la forme d'une courte partie (2'') munie de gradins, et pour l'essentiel symétrique par rapport à l'axe longitudinal (8) du pistolet à souder les goujons, ladite partie (2'') étant retenue avec verrouillage anti-rotation dans une partie centrale (10''), orientée parallèlement à l'axe longitudinal (8), du boîtier monobloc (1'') en matière plastique, la partie centrale (10'') du boîtier s'achevant, à son extrémité antérieure (10a''), par une bague métallique (3) qui est arrêtée sur cette extrémité (10a''), en vue du guidage précis de la partie (2'') pour l'essentiel symétrique par rapport à l'axe longitudinal (8) et, à son extrémité postérieure (10b'') entourant la pièce réceptrice (23''), par un capuchon (15) qui est retenu avec faculté de rotation, sur ladite extrémité (10b''), en vue du réglage de la pression élastique du ressort de pression (4'') ; et par le fait

que le tube d'appui (6), implanté à l'extrémité antérieure (10a'') de la partie centrale (10'') du boîtier par l'intermédiaire d'une plaque métallique de recouvrement (7) dotée d'un raccordement à la masse, ainsi que la partie centrale (10'') du boîtier, dans laquelle toutes les parties (21, 22'', 23'', 28'') fonctionnellement importantes du pistolet (1'') à souder les goujons sont intégrées, présentent un rapport dimensionnel d'environ 1 : 1,5 dans la direction de l'axe longitudinal commun (8) desdites parties.

4. Pistolet à souder les goujons, selon l'une des revendications 1 à 3, caractérisé par le fait que la région moyenne, matérialisant le piston (22 ; 22' ; 22''), de la partie (2 ; 2' ; 2'') pour l'essentiel symétrique par rapport à l'axe longitudinal (8), possède le diamètre maximal et comporte, dans sa partie supérieure en regard de laquelle se trouve un perçage conçu pour la fixation d'un câble d'alimentation électrique, une fente (25) dans laquelle s'engage, en tant que système de verrouillage anti-rotation, un appendice (14) saillant dans l'espace interne du boîtier (1 ; 1′ ; 1″).

5. Pistolet à souder les goujons, selon l'une des revendications 1 à 3 ou 4, caractérisé par le fait que la partie (2 ; 2′ ; 2″) pour l'essentiel symétrique par rapport à l'axe longitudinal (8) consiste, de préférence, en une pièce venue de tournage en laiton.

6. Pistolet à souder les goujons, selon l'une des revendications 1 à 3 ou 4, caractérisé par le fait que le boîtier monobloc (1 ; 1′ ; 1″) et le capuchon (15) sont fabriqués en une matière plastique thermorésistante, de préférence en Delrin (marque commerciale déposée).


## Claims

1. Stud welding gun for contact welding of studs and the like comprising a stud holder receiving means (21), a piston (22), a guide and receiving member (23) for a pressure spring (4) and a member (15) for setting the spring pressure of the pressure spring, said components being accommodated in a housing (1) of plastic to the front end of which a supporting tube (6) is attached, characterized in
that the stud holder receiving means (21), the piston (22) and the guide and receiving member (23) are formed as a unit in the form of a very short member (2) provided with steps and substantially symmetrical to the longitudinal axis (8) of the stud welding gun, said member (2) being mounted secured against rotation in a centre portion (10), aligned parallel to the longitudinal axis (8), of the one-part housing (1) of plastic, the housing centre portion (10) being closed at its front end (10a) by a metal ring (3) secured therein (10) for exact guiding of the member (2) substantially symmetrical to the longitudinal axis (8) and at its rear end (10b) surrounding the spring receiving member (23) by a cap (15) rotatably mounted there (10b) for setting the spring pressure of the pressure spring (4), and
that the supporting tube (6) which is secured via a cover plate (7) of metal, provided with ground connection, to the front end (10a) of the housing centre portion (10), and the housing centre portion (10), in which all the essential functional parts (21, 22, 23) of the stud welding gun are accommodated, have a size ratio of about 1:1 in the direction of the common longitudinal axis (8).

2. Stud welding gun for gap welding of studs and the like, comprising a stud holder receiving means (21), a piston (22′), a guide and receiving member (23′) for a clamping magnet (26′) and for a pressure spring (4′) and a member (15) for setting the spring pressure of the pressure spring (4′), said parts being accommodated in a housing (1′) of plastic to the front end of which a supporting tube (6) is attached, characterized in that the stud holder receiving means (21), the piston (22′) and the guide and receiving member (23′) are formed as a unit in the form of a very short member (2′) provided with steps and substantially symmetrical to the longitudinal axis (8) of the stud welding gun, said member (2′) being mounted secured against rotation in a centre portion (10′), aligned parallel to the longitudinal axis (8), of the one-part housing (1′) of plastic, the housing centre portion (10′) being closed at its front end (10a′) by a metal ring (3) secured therein (10′) for exact guiding of the member (2′) substantially symmetrical to the longitudinal axis (8) and at its rear end (10b′) surrounding the spring receiving member (23′) by a cap (15) rotatably mounted there (10b′) for setting the spring pressure of the pressure spring (4′), and that the supporting tube (6) which is secured via a cover plate (7) of metal, provided with ground connection, to the front end (10a′) of the housing centre portion (10′), and the housing centre portion (10′), in which all the essential functional parts (21, 22′, 23′, 26′) of the stud welding gun are accommodated, have a size ratio of about 1:1.5 in the direction of the common longitudinal axis (8),

3. Stud welding gun for gap welding studs and the like, comprising a stud holder receiving means (21), a piston (22″), a guide and receiving member (23″) for an armature (28″) and an adjustable clearance setting member (281″) and for a pressure spring (4″), said parts being accommodated in a housing (1″) of plastic, to the front end of which a supporting tube (6) is attached, characterized in that the stud holder receiving means (21), the piston (22″) and the guide and receiving member (23″) are formed as a unit in the form of a very short member (2″) provided with steps and substantially symmetrical to the longitudinal axis (8) of the stud welding gun, said member (2″) being mounted secured against rotation in a centre portion (10″), aligned parallel to the longitudinal axis (8), of the one-part housing (1″) of plastic, the housing centre portion (10″) being closed at its front end (10a″) by a metal ring (3) secured therein (10″) for exact guiding of the member (2″) substantially symmetrical to the longitudinal axis (8) and at its rear end (10b″) surrounding the spring receiving member (23″) by a cap (15) rotatably mounted there (10b″) for setting the spring pressure of the pressure spring (4″), and that the supporting tube (6) which is secured via a cover plate (7) of metal, provided with ground connection, to the front end (10a″) of the housing centre portion (10″), and the housing centre portion (10″), in which all the essential functional parts (21, 22″, 23″, 28″) of the stud welding gun are accommodated, have a size ratio of about 1:1.5 in the direction of the common longitudinal axis (8).

4. Stud welding gun according to any one of claims 1 to 3, characterized in that the centre region, representing the piston (22; 22′; 22″), of the member (2;2′;2″) substantially symmetrical to the longitudinal axis (8) has the greatest diameter and in its upper portion, which lies opposite a bore for securing a current supply cable, has a slot (25) into which a lug (14) projecting into the interior of the housing (1; 1′; 1″) engages as securing against rotation.

5. Stud welding gun according to any one of claims 1 to 3 or 4, characterized in that the member (2; 2′; 2″) substantially parallel to the longitudinal axis (8) is preferably a turned brass member.

6. Stud welding gun according to any one of claims 1 to 3 or 4, characterized in that the one-part housing (1; 1′; 1″) and the cap (15) are made from a heat-resistant plastic, preferably Delrin (registered trademark).

Fig. 1

Fig. 2

Fig.3